# FASCICULE DE BREVET EUROPEEN

(11) **EP 1 543 681 B1**
(45) Date de publication et mention de la délivrance du brevet: **22.10.2014**
(21) Numéro de dépôt: 03727591.4
(22) Date de dépôt: 17.03.2003
(51) Int. Cl.: H04N 5/76, G06F 3/033

(54) **PROCEDE ET SYSTEME DE LECTURE D'INFORMATIONS ENREGISTREES DANS UN APPAREIL AUDIOVISUEL**
VERFAHREN UND SYSTEM ZUM LESEN VON AUFGENOMMENEN DATEN VON EINEM AUDIOVISUELLEN GERÄT
METHOD AND SYSTEM OF READING INFORMATION RECORDED IN AN AUDIO-VISUAL APPARATUS

(30) Priorité: 15.03.2002 FR 0203197
(43) Date de publication de la demande: 22.06.2005
(73) Titulaire: Thomson Licensing, 92130 Issy-les-Moulineaux (FR)
(72) Inventeur: MARTIN, Jérôme, 78111 Dammartin en Serve (FR)
(74) Mandataire: Morain, David
(86) Numéro de dépôt international: PCT/FR2003/000836
(87) Numéro de publication internationale: WO 2003/079679

(56) Documents cités:
- US-A- 5 623 588
- US-A- 5 974 015
- US-A- 5 999 688
- US-B1- 6 188 831

## Description

La présente invention concerne un procédé et un système de lecture d'informations enregistrées dans un appareil audiovisuel.

L'invention est applicable notamment dans les systèmes où un ensemble d'informations telle qu'une émission audiovisuelle est mise à la disposition d'un utilisateur soit parce qu'elle a été enregistrée sur un support d'enregistrement et qu'elle est lisible par un lecteur tel qu'un magnétoscope, un lecteur de DVD (Digital Versatile Disc), un lecteur de CD, un lecteur de disque dur soit parce qu'elle est mise à disposition de l'utilisateur par un serveur distant.

L'invention est applicable notamment aux systèmes permettant de lire successivement, en série, les informations d'un enregistrement.

Pour faciliter la description, l'invention sera décrite ci-après dans le cadre de la visualisation d'une émission audiovisuelle. L'invention est cependant applicable à l'acquisition par l'utilisateur (lecture, écoute, etc.) de tout autre type d'informations présentées ordinairement de façon séquentielle.

Un utilisateur, lorsqu'il visionne une émission audiovisuelle peut éprouver le besoin de sauter certaines séquences ou de retourner à une séquence antérieure, ou de rechercher une séquence particulière dans l'enregistrement. Pour cela, il dispose sur les lecteurs du commerce (lecteurs de DVD, lecteur de CD, magnétoscope, etc.) de touches de retour rapide et d'avance rapide, de touches de lecture avant rapide et de lecture arrière rapide ainsi que de touches de ralenti. Ces touches seront désignées dans la suite de la description, de façon générale, par l'appellation « dispositif de déclenchement de mode de traitement spécial ».

Cependant lorsqu'il quitte une première séquence de vision, pour visionner ou rechercher une deuxième séquence, l'utilisateur a des difficultés à revenir à la première séquence sauf s'il note l'adresse de la première séquence au moment où il la quitte pour y revenir ensuite manuellement et encore il n'y revient pas toujours avec une grande précision.

Le brevet US5,999,688 enseigne un appareil de visualisation d'émissions audiovisuelles enregistrées tel qu'un magnétoscope. L'utilisateur peut marquer l'émission en pointant le début et la fin de séquences publicitaires. Une fois cette phase de marquage terminée, l'utilisateur peut naviguer d'une séquence publicitaire à une autre, la lecture d'une nouvelle séquence s'effectuant au début. Ce brevet n'enseigne pas que l'on peut revenir sur une séquence à l'endroit où on l'a précédemment quittée.

Le brevet US6,188,831 enseigne aussi un appareil de visualisation d'émissions audiovisuelles enregistrées dans un support. L'appareil dispose d'un moyen de pointage (un stylo optique) permettant de marquer des événements de l'émission.

Le brevet US5,623,588 enseigne un appareil informatique affichant une représentation graphique chronologique d'un événement. Cette représentation présente des variations selon que le moment correspondant comporte peu ou beaucoup d'éléments. Un marqueur permet de situer le moment courant lors de la visualisation de l'événement.

Le brevet US5,974,015 divulgue un moyen d'enregistrement numérique de données audio et/ou vidéo. Ces données sont découpées en paquets avant d'être enregistrées. Aucun de ces documents n'enseigne la possibilité de revenir facilement et précisément à un précédent point de lecture.

L'invention permet de résoudre cette difficulté.

L'invention concerne donc un procédé de lecture tel que défini dans la revendication 1.

Ce procédé est applicable à un système comportant plusieurs dispositifs de commande ou touches de commande disposées sur une télécommande ou la face avant de l'appareil, et dans ce cadre, l'étape de retour peut être commandée par l'un quelconque de ces dispositifs de commande.

Selon ce procédé, après une première étape de marquage, si l'utilisateur actionne à nouveau ledit dispositif de déclenchement de mode de traitement spécial après une durée de lecture de la deuxième séquence supérieure à une durée déterminée, une deuxième étape de marquage est déclenchée et ainsi de suite.

Par contre, si l'utilisateur actionne à nouveau ledit dispositif de déclenchement de mode de traitement spécial après une durée de lecture de la deuxième séquence inférieure à cette durée déterminée, la deuxième étape de marquage n'est pas déclenchée.

Dans un tel fonctionnement, les différents marquages successifs ne sont pas effacés de façon à permettre à l'utilisateur d'y revenir ultérieurement.

Pour pouvoir revenir à une séquence marquée lors d'une visualisation antérieure de l'émission enregistrée, on prévoit qu'à chaque information est affectée une adresse ou indication de localisation de cette information. Chaque étape de marquage prévoit l'inscription, dans une mémoire temporaire, de l'adresse ou de l'indication de localisation correspondant à une séquence d'informations, ce qui permettra ultérieurement de revenir à cette séquence. Pour cela, l'étape de retour comporte une phase de lecture de ladite mémoire. Ensuite, il est prévu une phase d'adressage de la séquence d'information correspondant à une indication de localisation lue dans la mémoire temporaire.

Une manière d'effectuer le marquage et d'organiser le retour à une séquence marquée est de numéroter, dans la mémoire temporaire, les différentes indications de localisation correspondant à différents marquages. Par ailleurs, le dispositif de retour qui est typiquement une interface utilisateur, peut comporter des touches numérotées. L'actionnement d'une touche numérotée permet la lecture de l'indication de localisation portant le même numéro puis l'étape de retour à la séquence située à l'indication de localisation lue.

Le procédé de l'invention prévoit par surcroît une étape d'affichage graphique pour permettre à l'utilisateur de gérer lui-même les retours à telles ou telles séquences marquées. Cet affichage graphique comporte une représentation du moment du marquage ou de la longueur de l'ensemble d'informations enregistrées ainsi que l'affichage sur ce graphique d'un repère localisant l'emplacement de chaque séquence marquée. A chaque repère est associé éventuellement un numéro de marquage.

L'affichage graphique peut être effacé à l'issue d'une temporisation et être remplacé par l'affichage d'un indicateur simplifié indiquant qu'au moins un marquage est enregistré. Puis, l'indicateur simplifié étant affiché, un premier actionnement du dispositif de retour déclenche l'affichage graphique et un deuxième actionnement déclenche l'étape de retour à une séquence marquée.

Plus simplement, on peut prévoir l'affichage d'une information graphique simple indiquant qu'au moins une étape de marquage a été déclenchée.

L'invention concerne également un système de lecture tel que défini dans la revendication 8.

Ce système comporte en outre au moins un dispositif de commande de retour à une séquence interrompue ainsi qu'un circuit de lecture de la mémoire commandant la lecture de l'adresse d'interruption (Add1, Add2...) dans ladite mémoire et commandant le retour à la lecture de l'enregistrement à partir de cette adresse d'interruption.

Le circuit de marquage permet de commander l'inscription dans la mémoire d'une ou plusieurs adresses d'interruption. Il peut également affecter à chaque adresse d'interruption (Add1, Add2, Add3 ...), un numéro d'ordre (M1, M2, M3 ...). Par ailleurs, l'actionnement d'une touche numérotée peut être utilisé par le circuit de lecture (46) pour commander la lecture dans la mémoire de l'adresse ayant le même numéro d'ordre que le numéro de la touche numérotée actionnée.

Les différents objets et caractéristiques de l'invention apparaîtront plus clairement dans la description qui va suivre faite à titre d'exemple non limitatif et dans les figures qui représentent :
- la figure 1a, un diagramme de fonctionnement d'un exemple de réalisation simplifié du procédé de lecture d'informations selon l'invention ;
- la figure 1b, un enregistrement illustrant le déroulement du procédé de la figure 1a;
- les figures 2a à 2c, un exemple de réalisation plus élaboré du procédé selon l'invention ;
- les figures 3a et 3b, des exemples d'affichages permettant à l'utilisateur d'utiliser le procédé selon l'invention ;
- la figure 4, un exemple de bloc diagramme d'un système permettant de mettre en oeuvre le procédé de l'invention.

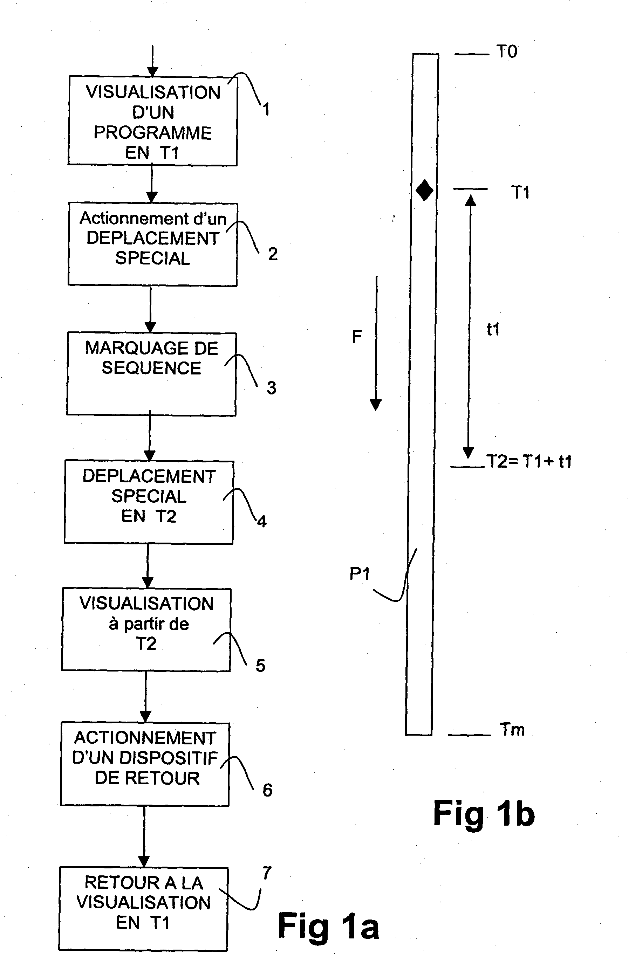

En se reportant aux figures 1 a et 1 b, on va donc décrire un exemple de réalisation du procédé selon l'invention.

L'invention est applicable à l'acquisition par un utilisateur d'informations enregistrées. Pour une question de clarté, l'invention sera décrite dans ce qui suit en considérant qu'il s'agit pour l'utilisateur de visionner une émission vidéo. Cette émission est enregistrée sur tout support d'enregistrement tel que cassette vidéo, disque DVD (Digital Versatile Disc), disque dur d'ordinateur par exemple, ou de décodeur de télévision lisible par un lecteur approprié. Elle peut également être enregistrée à distance, par exemple en recevant l'émission par un réseau de diffusion, ou téléchargée d'un serveur par une liaison point à point. L'utilisateur a donc accès à cette émission et peut donc la visionner sur un écran de visualisation (écran TV). Pour commander cette visualisation, il dispose de manière connue d'une télécommande ou d'un clavier qui commande le dispositif de lecture. De façon générale, l'utilisateur dispose de touches permettant de commander la lecture avant ou arrière de l'émission vidéo, de touches pour commander une avance rapide ou ralentie avant ou arrière du système de lecture de l'enregistrement en vue de sauter à la lecture d'une séquence différente. Il dispose également de touches pour commander la lecture rapide ou lente, avant ou arrière, en vue de faire des recherches de séquences ainsi que d'autres touches diverses permettant des fonctionnements particuliers. Comme mentionné précédemment, les touches d'avance rapide ou de ralentie et les touches de lecture rapide avant ou arrière sont désignées de façon générale, dans la présente description par l'appellation « dispositif de déclenchement de mode de traitement spécial ».

La figure 1b représente schématiquement un enregistrement, par exemple une émission vidéo qui commence à un moment T0 et se termine à un moment Tm. L'enregistrement est donc lu normalement selon le sens indiqué par la flèche F. Lorsque l'émission enregistrée est constituée de chapitre, comme c'est le cas actuellement dans un DVD, un perfectionnement consiste à ne visualiser qu'une représentation du chapitre courant ou de quelques chapitres dont celui courant. Ce perfectionnement est particulièrement utile lorsque l'émission est marquée en de nombreux endroits et qu'il est difficile de les distinguer lorsqu'ils sont trop proches dans le temps.

On suppose que l'utilisateur visualise l'enregistrement et qu'il se trouve à un repère de visualisation correspondant au moment T1 de l'enregistrement par rapport aux moment T0 et Tm. Sur le diagramme de la figure 1a, on se trouve donc à l'étape 1 située en haut de l'organigramme (« VISUALISATION D'UN PROGRAMME EN T1 »).

Pendant qu'il visionne l'émission, l'utilisateur actionne un dispositif de déclenchement de mode de traitement spécial. Par exemple, il désire obtenir un déplacement rapide vers une autre zone de l'enregistrement, mais cela pourrait être un autre mode tel qu'une lecture rapide ou un ralenti. Il réalise ainsi l'étape 2 de l'organigramme mentionnée « Actionnement d'un DEPLACEMENT SPECIAL ». Selon l'exemple de réalisation décrit, à l'étape 3 mentionnée « MARQUAGE DE SEQUENCE » un marquage de l'enregistrement est effectué au moment T1 en vue d'une utilisation ultérieure.

A l'étape 4 (« DEPLACEMENT SPECIAL EN T2 ») le système commande l'exécution du déplacement spécial. Par exemple, il commande une avance rapide et arrête cette avance rapide au moment T2 =T1 + t1. L'utilisateur visionne alors à nouveau l'enregistrement selon le mode de visualisation normal mais cette fois à partir du moment T2. Cela est mentionné à l'étape 5 de l'organigramme (« VISUALISATION à partir de T2 »).

Si, au cours de la visualisation de l'émission enregistrée, l'utilisateur actionne le dispositif de retour, alors le programme saute à l'étape 6 mentionnée « ACTIONNEMENT D'UN DISPOSITIF DE RETOUR ». Puis, le procédé de la figure 1a prévoit à l'étape 7 (« RETOUR A LA VISUALISATION EN T1 ») le retour du système au repère d'enregistrement précédemment marqué et donc le retour au moment T1. Il est à noter que ce dispositif de retour peut être une touche particulière ou, selon une variante, n'importe quelle touche de la télécommande ou du clavier de l'utilisateur, ou encore la sélection d'une icône apparaissant à l'écran.

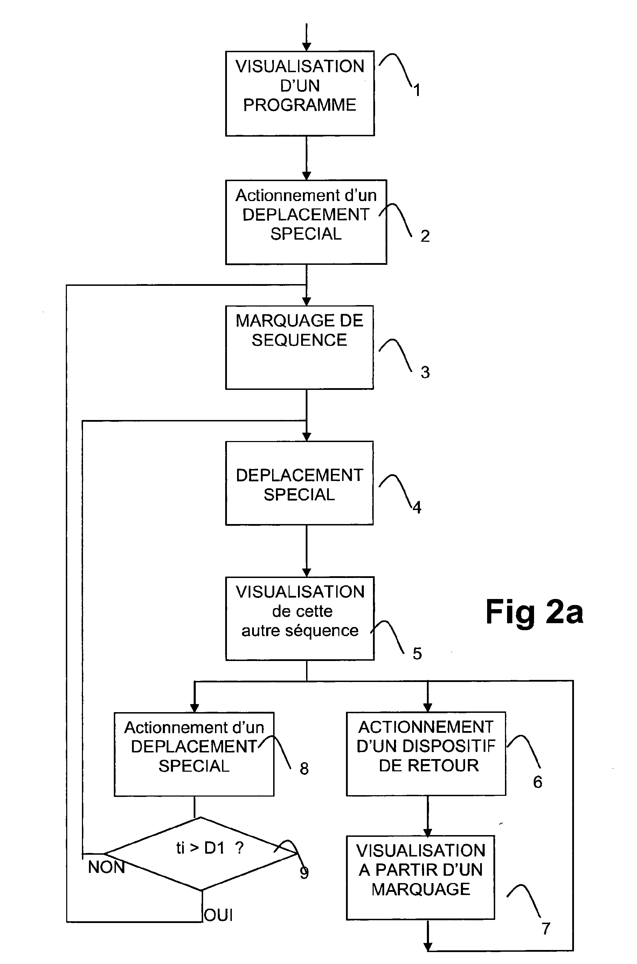

En se reportant aux figures 2a à 2c, on va décrire un exemple de réalisation plus perfectionné du procédé de l'invention.

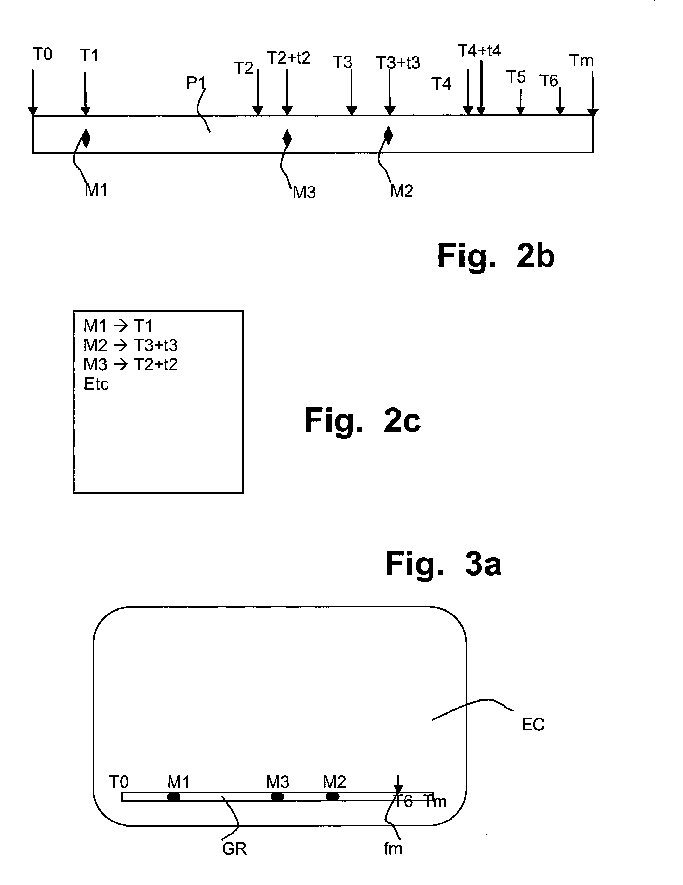

La figure 2b représente un enregistrement P1 qui commence au moment T0 et qui se termine au moment Tm. L'utilisateur visionne l'enregistrement. Au moment T1, il désire effectuer une avance rapide et faire diverses recherches dans l'enregistrement. Le procédé représenté en figure 2a va gérer le fonctionnement du système de façon que l'utilisateur puisse retrouver les divers repères de l'enregistrement par lesquels il est passé. Pour cela on va se reporter à l'organigramme de la figure 2a.

Durant l'étape 1, l'utilisateur visualise une émission contenue dans l'enregistrement P1 et cela jusqu'au moment T1 (« VISUALISATION D'UNE EMISSION EN T1 »).

Au moment T1, l'utilisateur actionne un dispositif de déclenchement de mode de traitement spécial (étape2).

Au cours de l'étape 3, indiquée « MARQUAGE DE SEQUENCE », une marque M1 est réalisée au moment T1 de l'enregistrement.

A cours de l'étape 4, le système commande le déplacement spécial vers une autre séquence de l'enregistrement, par exemple, jusqu'au repère de l'enregistrement situé au moment T3.

Au cours de l'étape 5, l'utilisateur visionne l'enregistrement à partir du moment T3 pendant une durée t3.

Comme précédemment, au cours de la visualisation de l'émission enregistrée, l'utilisateur peut actionner le dispositif de retour, alors le programme saute à l'étape 6 mentionnée « ACTIONNEMENT D'UN DISPOSITIF DE RETOUR », et à l'étape 7 de visualisation de la séquence à partir du marquage. Le programme continue en bouclant sur les deux étapes 6 et 7.

Supposons maintenant qu'au moment T3 + t3, l'utilisateur actionne un dispositif de déclenchement de mode de traitement spécial (étape 8), par exemple une touche de retour rapide.

Au cours de l'étape 9 on compare la durée t3 à une valeur prédéterminée à l'avance D1.

Si la durée t3 est supérieure à D1, selon le présent exemple de réalisation, on retourne à l'étape 3 et on procède au marquage de la séquence qui vient d'être interrompue. On effectue donc une marque M2 au moment T3+t3 de l'enregistrement. Ensuite on effectue le déplacement spécial commandé par l'utilisateur. Par exemple, comme cela est représenté sur la figure 2b, on effectue un retour rapide jusqu'au moment T2.

Si la durée t3 est inférieure à D1, selon le présent exemple de réalisation, on va directement à l'étape 4 et on effectue le déplacement rapide commandé par l'utilisateur sans effectuer le marquage au moment T3+t3 de l'enregistrement.

Sur la figure 2b, on a supposé que t3 est supérieur à D1. Le retour rapide en T2 est exécuté et une marque est faite au moment T3+t3 de l'enregistrement. Au moment T2, l'utilisateur visualise l'enregistrement dans le mode normal de visualisation (étape 5) jusqu'au moment T2+t2. A ce moment l'utilisateur actionne à nouveau un dispositif de déclenchement de mode de traitement spécial. On suppose que t2 est supérieur à D1. Le même fonctionnement que précédemment se reproduit en passant par les étapes 9, 3 et 4. Le repère situé au moment T2+t2 de l'enregistrement est donc marqué par un marquage M3 et le déplacement spécial est effectué. Selon l'exemple de la figure 2b, ce déplacement spécial est une avance rapide jusqu'au moment T4. L'utilisateur actionne alors à nouveau un dispositif de déclenchement de mode de traitement spécial à un moment T4+t4 tel que t4 est inférieur à D1. Dans ces conditions, l'enregistrement n'est pas marqué au moment T4+t4 et l'étape 4 est réalisée directement. Par exemple une avance rapide est commandée jusqu'au moment T5 de l'enregistrement (étape 4). L'utilisateur visualise l'enregistrement dans le mode normal de visualisation à partir de T5 (étape 5), puis au moment T6 il actionne le dispositif de retour à une séquence marquée (étape 6). Par exemple le retour se fait à la séquence de l'enregistrement marquée en dernier, c'est à dire à la marque M3.

Ensuite le fonctionnement se poursuit. Ce fonctionnement peut être interrompu comme décrit précédemment soit par l'actionnement d'un dispositif de déclenchement de mode de traitement spécial (étape 8), soit par l'actionnement d'un dispositif de retour à la séquence la plus récemment marquée (étape 6).

Le dispositif de retour peut être constitué de n'importe quelle touche du clavier de la télécommande ou de la face avant de l'appareil. Mais ce dispositif est différent de celui destiné aux déclenchements du mode de traitement spécial, ce dernier dispositif peut être une touche différente.

De façon générale, on voit donc que l'invention permet un marquage automatique d'une émission enregistrée lorsque l'utilisateur actionne un dispositif de déclenchement de mode de traitement spécial de façon à lui permettre de revenir également automatiquement à une séquence ainsi marquée lorsqu'il actionne un dispositif de retour.

Selon un perfectionnement de l'invention les touches numérotées et notamment, dans une télécommande d'un lecteur vidéo, les touches de sélection de chaînes de télévision sont utilisées comme dispositifs de retour. L'invention prévoit alors que l'actionnement d'une touche numérotée permet de désigner la marque portant le même numéro. Par exemple, dans l'exemple de la figure 2b, lorsque la visualisation se trouve en T6, l'actionnement de la touche numéro 1 permet de retourner directement à l'emplacement de l'enregistrement marqué M1. Cela permet d'éviter à l'utilisateur lorsqu'il est en T6 de repasser par les emplacements marqués M3 puis M2 pour retourner en M1.

Pour mettre en oeuvre cette disposition, on prévoit, selon un exemple de réalisation, dans l'étape de marquage de séquence (étape 3), une phase d'enregistrement, dans une mémoire temporaire, de l'indication de position de chaque séquence interrompue et donc du moment de l'interruption (T1, T2, ... Tn) et d'associer à chacune de ces indications un numéro d'ordre de marquage. Ainsi, la figure 2c représente une telle mémoire. Les différents moment T1, T3+t3, T2+t2 ont été enregistrés et des numéros d'ordre de marquages M1, M2, M3 leur ont été respectivement affectés. Ensuite, lors de l'actionnement d'un dispositif de retour (étape 6), l'étape de « VISUALISATION A PARTIR D'UN MARQUAGE » (étape 7) comportera une phase de lecture de la mémoire temporaire. Dans le cas où les touches numérotées ne sont pas spécialisées dans ce fonctionnement, on ira lire de préférence le dernier marquage enregistré pour avoir l'adresse de retour dans l'enregistrement. Dans le cas où les touches de retour doivent permettre le retour à une marque déterminée, le numéro de la touche actionnée permettra d'accéder directement au numéro d'ordre de marquage correspondant et ainsi à l'emplacement correspondant dans l'enregistrement.

Le procédé de l'invention prévoit, selon une variante, l'affichage sur un écran de visualisation, qui peut être tout simplement l'écran de télévision dans le cas ou l'enregistrement est une émission audiovisuelle, d'une représentation graphique illustrant la longueur ou la durée de l'enregistrement. Sur ce graphique, on prévoit, lors de chaque étape de marquage (étape 3), d'afficher un repère représentant le marquage réalisé. Egalement on prévoit d'afficher un repère mobile représentant l'emplacement de l'enregistrement en cours de lecture.

La figure 3a représente une telle représentation graphique. Sur l'écran de visualisation EC, on a prévu d'afficher un élément GR représentatif de la durée de l'enregistrement. L'élément a une forme linéaire sur la figure 3a, mais il pourrait avoir toute autre forme (un anneau ouvert par exemple). Aux deux extrémités de l'élément GR sont indiquées les moments de début et de fin de l'enregistrement, par exemple T0 et Tm.

Les différents marquages M1, M2, M3 réalisés sur l'enregistrement de la figure 2b ont été reportés sur cette représentation graphique. Au-dessus de chaque marquage est indiqué son numéro d'ordre de marquage (M1, M2, M3). Enfin, une flèche mobile fm se déplace au fur et à mesure du défilement de l'enregistrement. Par exemple, sur la figure 3a, la lecture de l'enregistrement a atteint le moment T6.

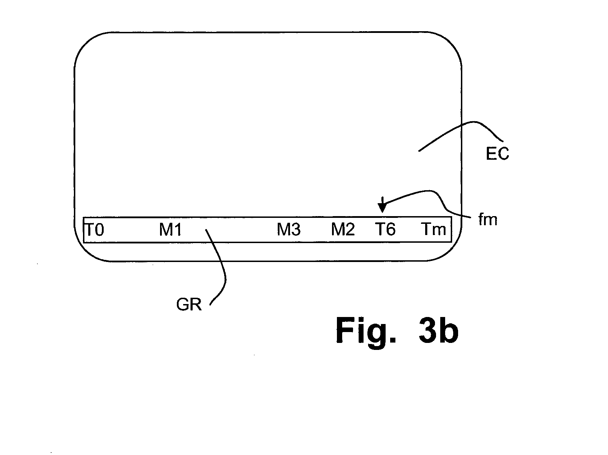

La figure 3b représente une variante selon laquelle la position des numéros des marques localise visuellement le moment des marques au cours de l'émission enregistrée. Les moments de début et de fin d'enregistrement (T0 et Tm), les numéros des marques M1, M2, M3 ainsi que le moment courant de lecture de l'enregistrement sont inscrits dans le graphique.

Ainsi, lors de l'étape 6 (ACTIONNEMENT D'UN DISPOSITIF DE RETOUR), l'utilisateur pourra choisir la séquence de l'enregistrement à partir de laquelle il désire reprendre la visualisation.

La représentation graphique ainsi affichée peut-représenter une gêne pour l'utilisateur. Le procédé de l'invention prévoit donc qu'au terme d'une temporisation, cette représentation graphique n'est plus affichée sur l'écran. Elle peut être remplacée par un repère de dimension réduite rappelant à l'utilisateur que des marquages ont été réalisés. Dans ce cas on prévoit qu'un premier actionnement d'un dispositif de retour déclenche l'affichage de la représentation graphique et un deuxième actionnement déclenche le retour (étape 6).

Selon une variante simplifiée on peut également ne pas afficher de représentation graphique, mais se contenter d'afficher un repère tel qu'une icône indiquant à l'utilisateur que des marquages ont été mis en mémoire dans l'appareil.

Un mode préféré de réalisation consiste à effacer les marques mises en mémoire lors de l'arrêt de l'appareil de lecture ou lors du changement d'enregistrement. Une variante consiste à proposer l'effacement dans un menu.

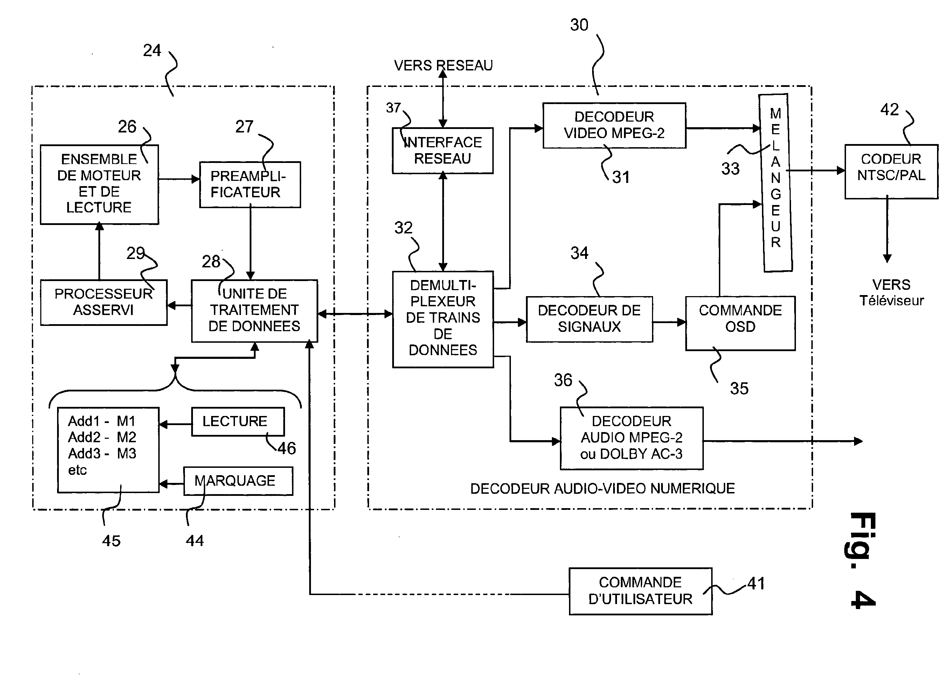

La figure 4 représente un exemple de bloc diagramme d'un système mettant en oeuvre un exemple de réalisation du procédé de l'invention appliqué à titre d'exemple à un lecteur de disque vidéo numérique.

Bien que l'exemple de mode de réalisation soit décrit en référence à un dispositif vidéo numérique adapté pour lire des données vidéo et audio comprimées provenant d'un disque et pour traiter les données conformément à la spécification DVD, on comprendra que la présente invention peut être utilisée dans n'importe quel dispositif de lecture vidéo dans lequel des informations de positions sont associées aux données à lire ou à des paquets de données à lire de telle sorte que le dispositif de lecture puisse rapidement localiser une donnée ou un bloc de données particulier et commencer la lecture à partir d'un emplacement sélectionné.

La figure 4 est un schéma de principe montrant les éléments de base d'un exemple de lecteur de disque vidéo numérique. La construction et le fonctionnement de ces éléments sont connus de l'homme de métier et ne seront pas traités de manière détaillée ici. Un lecteur de disque 24 comprend un ensemble de moteur et de lecture 26 qui, sous la commande d'un processeur asservi 29, fait tourner le disque et lit les informations mémorisées sur celui-ci. Un préamplificateur 27 et une unité de traitement de données DVD 28 traduisent les impulsions électriques provenant de l'ensemble de moteur et de lecture 26 en données numériques qui peuvent être traitées par une unité de décodeur audio/vidéo numérique 30. L'unité de traitement de données 28 réalise des fonctions telles que démodulation, correction d'erreurs et débrouillage des données brutes lues sur le disque de telle sorte que les données se trouvent dans un format convenable pour l'unité de décodeur 30.

L'unité de décodeur 30 reçoit les données démodulées, débrouillées et aux erreurs corrigées, traite les données, et fournit les signaux vidéo et audio appropriés à une unité d'affichage, telle qu'un poste de télévision. L'unité de décodeur 30 comprend un démultiplexeur de trains de données 32 qui démultiplexe les données provenant de l'unité de traitement de données 28 en une pluralité de trains de données distincts, comprenant un train vidéo, un train audio et un train de signaux spéciaux, et fournit les trains de données à leurs décodeurs de données respectifs. Un décodeur vidéo 31 reçoit le train vidéo et fournit un signal vidéo à un mélangeur 33. Un décodeur de sous-images 34 reçoit le train de sous-images et fournit les données à une commande d'affichage sur écran (OSD) 35 qui fournit des signaux vidéo OSD au mélangeur 33. Le signal vidéo combiné provenant du mélangeur 33 est fourni à un codeur NTSC/PAL 42 qui fournit à un dispositif d'affichage vidéo un signal vidéo qui est conforme au standard approprié des signaux vidéo. Un décodeur audio 36 reçoit les trains audio du démultiplexeur de train de données 32 et fournit les signaux audio appropriés à un système audio.

L'unité de traitement de données 28 commande le fonctionnement du lecteur de disque 24. Elle est couplée à un dispositif de commande d'utilisateur 41, lequel peut comprendre des dispositifs de télécommande à infrarouge, des boutons sur panneau avant du lecteur ou assimilés, et traduit les données provenant du dispositif de commande d'utilisateur 41 afin de commander le fonctionnement des divers éléments du lecteur de disque 24 décrits ci-dessus. L'unité de traitement de données 28 peut comporter une mémoire ou peut être couplé à une mémoire pour mémoriser diverses tables qui déterminent la séquence de présentation des données extraites d'un disque. De manière caractéristique, l'unité de traitement de données 28 est également configurée pour commander diverses caractéristiques d'accès du lecteur de disque 24. L'unité de traitement de données 28 peut être mise en oeuvre sous diverses formes, dont, mais sans s'y limiter, un circuit intégré dédié ou une partie d'une unité de décodeur/contrôleur. L'unité de traitement de données 28 peut être composée d'une unité ou d'une pluralité d'unités de contrôleurs convenables.

Dans le cadre des exemples de réalisation décrits précédemment, il est prévu une mémoire 45 servant notamment à mémoriser les adresses d'interruption de lecture comme cela va être explicité ci-après. Cette mémoire peut être dans l'unité de traitement 28

Dans l'exemple de réalisation de la figure 4, l'utilisateur commande le lecteur à l'aide du dispositif de commande 41 tel qu'une télécommande. Il est connu qu'un ordre d'avance rapide, par exemple, émis par la télécommande est interprété par l'unité de traitement de données 28 qui commande l'arrêt de l'affichage et, par l'intermédiaire du processeur asservi 29, l'avance rapide de l'unité de lecture de disque. Lors de cette commande, l'unité de traitement de données 28 , à l'aide d'un circuit de marquage 44 commande l'inscription de l'interruption et de l'adresse d'interruption (Add1 par exemple) dans une mémoire. Eventuellement, en application du procédé de la figure 2a, il associe à cette adresse un numéro d'ordre de marquage (M1 par exemple). Il procède de cette façon à chaque fois qu'un dispositif de déclenchement de mode de traitement spécial est actionné sur la télécommande. C'est ainsi qu'on pourra avoir plusieurs adresses de retour stockées en mémoire 45 comme cela est représenté sur la figure 4.

Lorsque l'utilisateur actionne une touche de sa télécommande autre qu'un dispositif de déclenchement de mode de traitement spécial ou que les touches « pause » ou « arrêt » et de préférence lorsqu'il actionne une touche numérotée, l'unité de traitement de données 28 , à l'aide du circuit de lecture 46 reconnaît qu'il doit commander un retour à une adresse du disque marquée précédemment en mémoire 45. Elle commande la lecture d'une adresse précédemment mémorisée et la transmet au processeur asservi 29 pour que celui-ci commande au lecteur 24 d'aller lire le disque à l'adresse fournie par l'unité de traitement de données 28 . Dans le cadre de l'application du procédé de la figure 2a, la manoeuvre d'une touche numérotée permet au circuit de lecture 46 de commander la lecture en mémoire 45 de l'adresse ayant comme numéro d'ordre (M1, M2, M3 ...) le même numéro que la touche actionnée.

Enfin, les adresses d'interruption ou adresses de retour ainsi que leurs numéros d'ordres associés pourront être effacés sous la commande de l'unité de traitement lorsque l'utilisateur commandera l'arrêt du lecteur ou changera le disque. Bien entendu, une touche de fonction particulière pourra être prévue sur la télécommande pour effacer ces informations en mémoire.

## Revendications

1. Procédé de lecture d'une émission enregistrée dans un système de lecture permettant de lire séquentiellement ladite émission et comportant au moins un dispositif d'introduction de commandes (41),
**caractérisé en ce qu'**il comporte :
- la visualisation (5) en mode normal de l'émission enregistrée à partir d'un moment de visualisation donné (T3) défini par rapport au début de ladite émission;
- un actionnement (8) d'un déplacement spécial par l'intermédiaire dudit dispositif d'introduction de commandes (41);
- une comparaison (9), avec une valeur prédéterminée non nulle (D1), de la durée de visualisation (t3) entre ledit moment de visualisation (T3) et l'actionnement (8) du déplacement spécial;
- un marquage (3) de ladite émission enregistrée, au moment d'actionnement du déplacement spécial (T3+t3), lorsque ladite durée de visualisation (t3) est supérieure à ladite valeur prédéterminée (D1), l'émission enregistrée n'étant pas marquée lorsque la durée de visualisation (t3) est inférieure à ladite valeur prédéterminée (D1) ;
- un retour ultérieur (7) à la visualisation de l'émission à partir dudit moment marqué (T3+t3) sur actionnement d'un dispositif de retour dudit système de lecture.

2. Procédé selon la revendication 1, dans lequel les étapes visualisation (5), d'actionnement (8) d'un déplacement spécial, de comparaison (9) et de marquage (3) sont répétées, de sorte que ladite émission enregistrée comporte plusieurs marquages associés aux moments correspondants d'actionnement d'un déplacement spécial, chaque marquage étant associé à un numéro d'ordre de marquage, les numéros d'ordre de marquage étant incrémentés à chaque marquage.

3. Procédé selon la revendication 2, dans lequel le retour à la visualisation de l'émission depuis un marquage donné est réalisé en actionnant une touche ou une icône du dispositif de retour portant le même numéro que le numéro d'ordre dudit marquage donné.

4. Procédé selon l'une quelconque des revendications 1 à 3, **caractérisé en ce qu'**il comporte une étape d'affichage graphique comprenant une représentation (GR) de la durée ou de la longueur de l'émission enregistrée ainsi qu'un affichage sur ce graphique d'un repère (M2 ; M3) associé à un marquage de ladite émission.

5. Procédé selon la revendication 4, **caractérisé en ce qu'**à chaque repère est associé un numéro d'ordre de marquage (M2 ; M3).

6. Procédé selon l'une quelconque des revendications précédentes, **caractérisé en ce qu'**il prévoit une étape d'affichage d'une information graphique indiquant qu'au moins une étape de marquage a été déclenchée.

7. Procédé selon l'une quelconque des revendication précédentes, dans lequel le déplacement spécial appartient au groupe de déplacements comprenant :
- un déplacement en avance rapide avant ;
- un déplacement en avance rapide arrière ;
- un déplacement en lecture ralentie avant ;
- un déplacement en lecture ralentie arrière ;
- un déplacement en lecture rapide avant ;
- un déplacement en lecture rapide arrière.

8. Système de lecture d'une émission enregistrée permettant de lire séquentiellement ladite émission et comportant au moins un dispositif d'introduction de commandes (41) capable notamment d'interrompre la lecture normale de l'émission enregistrée de façon à se déplacer vers une autre séquence de l'enregistrement
**caractérisé en ce qu'**il comporte :
- un circuit de marquage configuré pour :
▪ comparer, avec une valeur prédéterminée non nulle (D1), la durée de visualisation (t3) entre un début de visualisation en mode normal (T3) de l'émission enregistrée et un actionnement d'un déplacement spécial par l'intermédiaire dudit dispositif d'introduction de commandes (41); et
▪ marquer ladite émission enregistrée, au moment d'actionnement du déplacement spécial (T3+t3), lorsque la durée de visualisation (t3) est supérieure à ladite valeur prédéterminée (D1), l'émission enregistrée n'étant pas marquée lorsque la durée de visualisation (t3) est inférieure à ladite valeur prédéterminée (D1) ;
- un dispositif de retour configuré pour permettre de retourner ultérieurement à la visualisation de l'émission à partir dudit moment marqué (T3+t3) sur actionnement dudit dispositif de retour.

## Patentansprüche

1. Verfahren zur Wiedergabe einer von einem Wiedergabesystem aufgenommenen Sendung, das es ermöglicht, die besagte Sendung sequentiell wiederzugeben, und das mindestens eine Vorrichtung zur Eingabe von Befehlen (41) umfasst,
**dadurch gekennzeichnet, dass** es besteht aus:
- der Anzeige (5) im normalen Modus der aufgenommenen Sendung ab einem bestimmten Anzeigezeitpunkt (T3), der in Bezug auf den Anfang der besagten Sendung festgelegt wurde,
- einer Betätigung (8) einer speziellen Verschiebung anhand der besagten Vorrichtung zur Eingabe von Befehlen (41),
- einem Vergleich (9), mit einem vorher festgelegten Wert, der nicht null ist (D1), der Anzeigedauer (t3) zwischen dem besagten Anzeigezeitpunkt (T3) und der Betätigung (8) der speziellen Verschiebung,
- einer Kennzeichnung (3) der besagten aufgenommenen Sendung zum Zeitpunkt der Betätigung der speziellen Verschiebung (T3+t3), wenn die besagte Anzeigedauer (t3) über dem besagten vorher festgelegten Wert (D1) liegt, wobei die aufgenommene Sendung nicht gekennzeichnet wird, wenn die Anzeigedauer (t3) unterhalb des besagten vorher festgelegten Wertes (D1) liegt,
- eine spätere Rückkehr (7) zur Anzeige der Sendung ab dem besagten, gekennzeichneten Zeitpunkt (T3+t3) durch Betätigung einer Rückkehrvorrichtung des besagten Wiedergabesystems.

2. Verfahren nach Anspruch 1, in welchem die Schritte zur Anzeige (5), zur Betätigung (8) einer speziellen Verschiebung, zum Vergleich (9) und zur Kennzeichnung (3) wiederholt werden, dergestalt, dass die besagte aufgenommene Sendung mit mehreren Kennzeichnungen versehen ist, die mit den jeweiligen Betätigungszeitpunkten einer speziellen Verschiebung verbunden sind, wobei jede Kennzeichnung mit einer fortlaufenden Kennzeichnungsnummer verbunden ist, wobei die fortlaufenden Kennzeichnungsnummern bei jeder Kennzeichnung hochgezählt werden.

3. Verfahren nach Anspruch 2, in welchem die Rückkehr zur Anzeige der Sendung nach einer bestimmten Kennzeichnung erfolgt, indem eine Taste oder ein Icon der Rückkehrvorrichtung betätigt wird, die die gleiche Nummer wie die fortlaufende Nummer der besagten bestimmten Kennzeichnung trägt.

4. Verfahren nach irgendeinem der Ansprüche 1 bis 3, **dadurch gekennzeichnet, dass** es einen Schritt zur grafischen Darstellung enthält, der eine Abbildung (GR) der Dauer oder der Länge der aufgenommenen Sendung sowie eine Darstellung eines mit einer Kennzeichnung der besagten Sendung verbundenen Markierungspunktes (M2; M3) auf dieser Grafik umfasst.

5. Verfahren nach Anspruch 4, **dadurch gekennzeichnet, dass** jeder Markierungspunkt mit einer fortlaufenden Kennzeichnungsnummer (M2; M3) verbunden ist.

6. Verfahren nach irgendeinem der vorstehenden Ansprüche, **dadurch gekennzeichnet, dass** darin ein Schritt zur Darstellung einer grafischen Information vorgesehen ist, mit dem angegeben wird, dass mindestens ein Kennzeichnungsschritt ausgelöst wurde.

7. Verfahren nach irgendeinem der vorstehenden Ansprüche, in dem die besondere Verschiebung durch die Verschiebungseinheit erfolgt, bestehend aus:
- einer Verschiebung im Schnellvorlauf;
- einer Verschiebung im Schnellrücklauf;
- einer Verschiebung durch Vorwärtswiedergabe in Zeitlupe;
- einer Verschiebung durch Rückwärtswiedergabe in Zeitlupe;
- einer Verschiebung durch schnelle Vorwärtswiedergabe;
- einer Verschiebung durch schnelle Rückwärtswiedergabe.

8. System zur Wiedergabe einer aufgenommenen Sendung, das es ermöglicht, die besagte Sendung sequentiell wiederzugeben, bestehend aus mindestens einer Vorrichtung zur Eingabe von Befehlen (41), durch die insbesondere die normale Wiedergabe der aufgenommenen Sendung unterbrochen werden kann, indem eine Verschiebung zu einer anderen Sequenz der Aufzeichnung erfolgt,
**dadurch gekennzeichnet, dass** es besteht aus:
- einem Kennzeichnungskreis, konfiguriert für:
▪ das Vergleichen, mit einem vorher festgelegten Wert, der nicht null ist (D1), der Anzeigedauer (t3) zwischen einem Anzeigebeginn im normalen Modus (T3) der aufgenommenen Sendung und einer Betätigung einer besonderen Verschiebung anhand der besagten Vorrichtung zur Eingabe von Befehlen (41), und
▪ das Kennzeichnen der besagten aufgenommenen Sendung zum Zeitpunkt der Betätigung der besonderen Verschiebung (T3+t3), wenn die Anzeigedauer (t3) über dem besagten vorher festgelegten Wert (D1) liegt, wobei die aufgenommene Sendung nicht gekennzeichnet wird, wenn die Anzeigedauer (t3) unterhalb des besagten vorher festgelegten Wertes (D1) liegt,
- eine konfigurierte Rückkehrvorrichtung, um die spätere Rückkehr zur Anzeige der Sendung ab dem besagten gekennzeichneten Zeitpunkt (T3+t3) durch Betätigung der besagten Rückkehrvorrichtung zu ermöglichen.

## Claims

1. Method for reading a recorded programme in a reading system making it possible to read sequentially said programme and comprising at least one command entry device (41),
**characterised in that** it comprises:
- the display (5) in normal mode of the recorded programme from a given display moment (T3) defined with respect to the start of said programme;
- an actuation (8) of a special displacement via the intermediary of said command entry device (41);
- a comparison (9), with a predetermined non-zero value (D1), of the display duration (t3) between said display moment (T3) and the actuation (8) of the special displacement;
- a marking (3) of said recorded programme, at the moment of actuation of the special displacement (T3+t3), when said display duration (t3) is higher than said predetermined value (D1), the recorded programme not being marked when the display duration (t3) is less than said predetermined value (D1);
- a subsequent return (7) to the display of the programme from said marked moment (T3+t3) on actuation of a return device for said reading system.

2. Method according to claim 1, wherein the steps of display (5), of actuation (8) of a special displacement, of comparison (9) and of marking (3) are repeated, so that said recorded programme comprises several markings associated with the corresponding moments of actuation of a special displacement, each marking being associated with a marking order number, the marking order numbers being incremented at each marking.

3. Method according to claim 2, wherein the return to the display of the programme from a given marking is achieved by actuating a key or an icon of the return device bearing the same number as the order number of said given marking.

4. Method according to any one of claims 1 to 3, **characterised in that** it comprises a step of graphical display comprising a representation (GR) of the duration or of the length of the recorded programme as well as a displaying on this graphic of a mark (M2; M3) associated with a marking of said programme.

5. Method according to claim 4, **characterised in that** a marking order number (M2; M3) is associated with each mark.

6. Method according to any one the preceding claims, **characterised in that** it provides for a step of displaying graphical information indicating that at least one marking step has been initiated.

7. Method according to any one of the preceding claims, wherein the special displacement belongs to the group of movements comprising:
- a fast forward advance displacement;
- a fast reverse advance displacement;
- a slow forward read displacement;
- a slow reverse read displacement;
- a fast forward read displacement;
- a fast reverse read displacement.

8. System for reading a recorded programme making it possible to read sequentially said programme and comprising at least one command entry device (41) capable notably of interrupting the normal reading of the recorded programme so as to move to another sequence of the recording **characterised in that** it comprises:
- a marking circuit configured to:
• compare, with a predetermined non-zero value (D1), the display duration (t3) between a start of display in normal mode (T3) of the recorded programme and an actuation of a special displacement via the intermediary of said command entry device (41); and
• mark said recorded programme, at the moment of actuation of the special displacement (T3+t3), when said display duration (t3) is higher than said predetermined value (D1), the recorded programme not being marked when the display duration (t3) is less than said predetermined value (D1);
- a return device configured to make it possible to return subsequently to the display of the programme from said marked moment (T3+t3) on actuation of said return device.
